# EUROPEAN PATENT SPECIFICATION

(11) **EP 0 275 916 B1**
(45) Date of publication and mention of the grant of the patent: **22.03.1995**
(21) Application number: 88100381.8
(22) Date of filing: 13.01.1988
(51) Int. Cl.: G11B 19/20, G11B 19/00

(54) **Housing for magnetic disk device**
Gehäuse für ein Magnetplattengerät
Boîtier pour dispositif à disque magnétique

(30) Priority: 14.01.1987 JP 4993/87
(43) Date of publication of application: 27.07.1988
(73) Proprietor: FUJITSU LIMITED, Kawasaki-shi, Kanagawa 211 (JP)
(72) Inventor: Tochiyama, Kazunori Fujitsu Limited Patent Dep., Kawasaki-shi Kanagawa 211 (JP); Mihara, Takahisa Fujitsu Limited Patent Dep., Kawasaki-shi Kanagawa 211 (JP)
(74) Representative: Sunderland, James Harry

(56) References cited:
- EP-A- 0 151 258
- DE-A- 2 718 563
- US-A- 3 923 197
- PATENT ABSTRACTS OF JAPAN, unexamined applications, P field vol. 7, no. 206,September 10, 1983
- PATENT ABSTRACTS OF JAPAN, unexamined applications, E field, vol. 2, no. 58,April 26, 1978

## Description

The present invention relates to a magnetic disk memory device, and more specifically relates to a housing for supporting a magnetic disk pack and a magnetic head positioner.

A magnetic disk device has a magnetic disk pack which comprises a plurality of magnetic disks, coaxially stacked on a first spindle with a predetermined spacing between one another, and a magnetic head positioner having plurality of arms each carrying a magnetic head. The arms and the disks are alternately arranged, with arms positioned in spaces between disks, and one end of each arm is fixed on a second spindle. Rotating the second spindle back and forth around its axis through a specific angle, each of the magnetic heads is brought to a position over a desired magnetic track formed on a corresponding disk surface, to read or write information from or to the track.

Technical trends in recent development of magnetic disk devices are mainly directed towards increasing the density with which information can be stored on the surface of a magnetic disk, and towards the achievement of shorter access times for stored information. On the other hand, the space available for magnetic disk devices in electronic devices is becoming smaller, as a result of the trend towards miniaturization of electronic devices. So, in recent magnetic disk devices having an outer diameter of 21 cm and an inner diameter of 10 cm, for example, the track density of the memory tracks on the disk surface has reached 1,000 tpi (tracks per inch) for example, and the rotational speed of the disk has become as high as 3,600 rpm.

A magnetic head should not contact a disk surface, to avoid wear and damage to both the disk and the magnetic head. However, it is desirable to keep the distance between the magnetic head and the disk surface as small as possible in order to increase the sensitivity of the magnetic head and to decrease the area of magnetic domain required for storing an information bit, and hence to increase the bit density of a magnetic track. The gap between the magnetic head and the disk surface is known as the flying height in the art. In recent devices, the flying height is as little as 0.2 »m. Moreover the flying height must be kept constant, in order to maintain constant sensitivity of the magnetic head, and to attain stable operation of the device. It is, therefore, a very difficult but important task to keep a constant flying height between a head and a disk rotating with high speed, and to set the head precisely in a position over a desired magnetic track of narrow width, 25 »m for example.

In order to maintain precisely the relative position between a magnetic head and a magnetic track at a constant value, it is important to achieve stable and smooth motion of the spindles of both the magnetic disk pack and the magnetic head positioner. The supporting mechanisms for these spindles, with a housing for supporting them, are crucial parts of a magnetic disk device. The housing for supporting the magnetic disk pack and these mechanisms has an additional function as a container to seal and protect contained mechanisms from the ambient environment, to protect them from dust and moisture. Accordingly, the design of the housing of a disk pack is important for the operational ability of a magnetic disk device. The design is significant also for the cost of assembling and adjusting a magnetic disk device.

Generally, the housing of the magnetic disk pack is divided into two parts, in order that the disk pack can be installed in the housing.

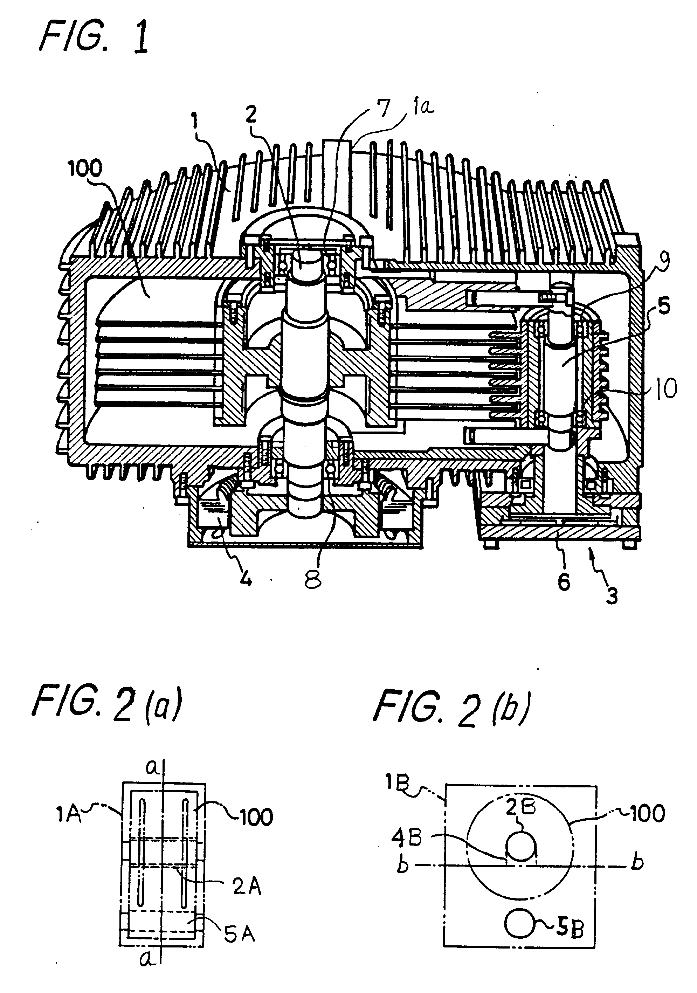

Fig. 1 is a partial cutaway perspective view of part of an exemplary magnetic disk apparatus or device illustrating its general configuration. Housing 1 is divided into two sections which are joined to each other at a line 1a. It may be considered that the entire apparatus or device is composed of the part seen in Fig. 1 and another half part having a structure almost symmetrical with that of Fig. 1.

In the apparatus of Fig. 1, six magnetic disks 100 are assembled in a stack around a spindle 2 of a magnetic disk pack. The number of the disks may be varied depending on the memory size to be provided by the apparatus. The spindle 2 is supported at its two ends by ball bearings 7 and 8. These bearings contain ferrofluidic seals which maintain airtight seals between inside and outside spaces separated by the bearings while assuring free rotation of the bearings. The magnetic disks 100 are spaced a predetermined distance apart from each other and are rotated around the spindle 2 by a DC motor 4 attached to one end of the spindle 2. A magnetic head positioner 3 has a similar structure to that of the magnetic disk pack. It has arms (not completely shown) fixed to a spindle 5, which is supported by ball bearings 9 and 10. The spindle 5 is driven by a voice coil motor 6 to rotate around its axis to the left and right through a desired angle. So, a magnetic head (not shown) supported by an arm can be brought to a desired position over a magnetic disk.

Generally, the magnetic disk pack and the magnetic head positioner are supported at their ends by bearings as shown in Fig. 1. Such a double-ended support structure as shown in Fig. 1 is superior to a single-ended support structure that supports a spindle by only one bearing attached to one end of the spindle, because the double-ended structure provides more stable operation of the device compared to the single-ended structure. In particular, the former structure is better because it may be used regardless of the inclination of the axis of the spindle, vertical or horizontal for example. However, in some cases, the spindle of the magnetic head positioner may employ a single-ended structure. In the following disclosure, however, explanation will be given with respect to double-ended structures. But it will be apparent that the present invention may also be applied to single-ended structures.

As described above, the housing of the magnetic disk pack (simplified as housing hereinafter) is separated into two sections or parts, in order that the disk pack can be installed therein.

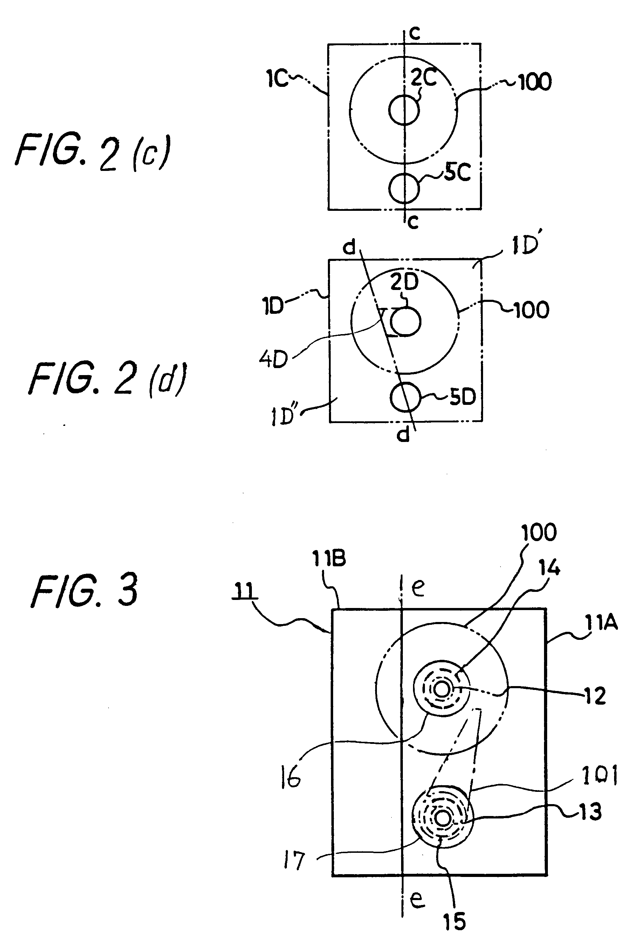

The housings of previously proposed devices are of several different types depending on the way in which they are divided; that is, the relationship between the housing and a cutting plane which intersects the housing to divide it into two parts. Typical cutting types are schematically shown in Figs. 2(a) to 2(d), which are schematic diagrams illustrating some of the typical ways in which a housing is separated into two parts by a cutting plane.

Fig.2(a) illustrates a first type and shows a cross section of a housing 1A, containing disks 100, their spindle 2A and a spindle 5A of a magnetic head positioner (not shown completely). The housing 1A is mechanically separable into left and right parts at a border plane positioned vertically to the plane of the Figure at a line a-a. After the magnetic disks 100, their spindle 2A and the spindle 5A of the magnetic head positioner are installed into the housing 1A, the left and right parts of the housing are engaged to each other. Details of such a type of magnetic disk device are disclosed in, for example, U.S.P. 4,315,288 by Bernett et al., published on February 9, 1982.

With such a configuration, opposite ends of the spindles of the magnetic disk pack and the magnetic head positioner (simplified respectively as disk pack and head positioner hereinafter) are supported by walls belonging to opposite halves of the housing. So, the centres of the bearings for supporting a spindle at its two ends are apt to become eccentric from each other. Further, adjustment of these bearings is very critical, in order to tightly maintain magnetic heads and magnetic disks in respective desired positions.
Moreover, if the two halves of a housing belonged to different fabrication lots, problems may arise due to thermal off-track caused by difference of thermal expansion coefficients between the different fabrication lots.

In order to avoid such difficulty, a single-ended type structure is sometimes adopted. But, as has been described before, with such a structure the stability of the support given to the spindles may be insufficient. Especially, problems increase when the number of spindles or the rotational speed of the disks is increased.

Fig. 2(b) is a schematic side view of a housing 1B illustrating a second type of housing separation. As shown in the Figure, the housing is separated into upper and lower parts between spindle 2B of the disk pack and spindle 5B of the head positioner.

Incidentally, the terms upper and lower or left and right as applied to housing parts are used for convenience of description only. Actual disposition or orientation of housing parts of a device in use may be different.

The cutting plane in Fig. 2(b) is positioned vertically with respect to the plane of the Figure at a line b-b. The device shown in Fig. 1 belongs to this type. In the case of Fig. 2(b), slots 4B are provided in the walls on opposite sides of the upper half of the housing 1B. A slot 4B is cut from an opening edge at the cutting plane through line b-b, to the position of the spindle 2B, in order to set the spindle at the proper position. In the Figure, the spindle 5B is of single-ended type, so a slot is unnecessary for the spindle 5B. But, if the spindle 5B is supported at both ends, it is necessary to provide another pair of slots in the lower half of the housing, like slots 4B on the upper half of the housing.

In the housing type of Fig. 2(b), the spindles 2B and 5B of the disk pack and the head positioner are respectively installed in different halves of the housing, and mechanically engaged to each other. So, adjustment for maintaining relative positions of a magnetic head and a disk is very critical, and the problem of thermal off-track described with respect to the first housing type is not overcome. Further, the housing has slots cut in both side walls of the housing, so housing rigidity is impaired. Further, since the number of parts of the housing increases, assembly cost also increases.

Fig. 2(c) shows schematically a side view of a third type of housing 1C. The housing 1C is separated into left and right halves by a plane indicated by a line c-c, which passes (vertically to the plane of the Figure) through the centres of spindles 2C and 5C of disk pack and head positioner. In the type of Fig. 2(c), holes in the housing for supporting the spindles 2C and 5C are separated each into two semicircles. This increases the difficulty of working, and hence decreases the accuracy of roundness of the circle formed by combining these two semicircles. The rigidity of the housing for supporting the spindles 2C and 5C is decreased, and the disk pack may sometimes suffer from vibration. The thermal off-track problem is not solved. Moreover, the engaging surfaces of the left and right halves of the housing are not in a single plane, because semicircles are cut for the spindles. This increases the difficulty of inserting a sealing means between the two halves of the housing to seal off the disk pack from surrounding space. So, air tightness is often decreased.

Fig. 2(d) shows schematically a side view of a fourth type of housing 1D, in which the housing is divided into a part 1D′ and a part 1D˝ at a plane d-d which passes (vertically to the plane of the Figure) through a spindle 5D of the head positioner, and intersects a side of the housing diagonally. In this type, side slots 4D for inserting spindle 2D of the disk pack are necessary. In the housing type of Fig. 2(d), the spindle 5D is a single-ended type. More details of such a type are given in, for example, U.S.P. 4,692,827, by Biermeier et al., published on September 8, 1987. This type is intended to ease difficulty in assembly of the device. But the difficulties as described with respect to the types of Fig. 2(b) still remain.

As has been described above, the structures of previously proposed housings are concerned with the ease of assembling a disk device, and by this are intended to increase accuracy of the assembled device. Accordingly, in many cases, a spindle, especially the spindle of the head positioner, is of a single-ended type. A double-ended spindle is supported by a pair of holes each divided into two parts by the intersection plane of housing parts, or at least a hole for supporting a spindle is cut away at one side to provide a slot for inserting the spindle. This results in lack of rigidity of the housing and causes various problems as described above.

JP-A-58 102 364 discloses magnetic disk apparatus in which a double ended spindle supports magnetic disks and a carriage arrangement, with a carriage guide rail and a carriage driver, supports a head.

The housing of the apparatus is split into a housing body, with the spindle and the carriage arrangement in the housing body, and a cover. The spindle is supported at both ends by the housing body.

EP-A-0 151 258 (c.f. also U.S.P 4,692,827 mentioned above) discloses a housing supporting a magnetic disk pack and a magnetic head positioner therein, the magnetic disk pack comprising magnetic disks supported by a spindle, and the housing comprising a shell and a cover.

The shell mechanically supports both the magnetic disk pack and the magnetic head positioner, and the cover closes an opening of the shell.

The shell and the cover have each an open edge, which open edges are not coplanar when shell and cover are engaged to each other. The open edge of the shell has a slot which is not matched by the open edge of the cover.

The spindle of the disk pack is supported at its two ends on respective side walls of said shell facing each other. The slot, extending in one side wall of the shell (1) from the open edge of the shell, provides a rounded but non-circular holding hole for one end of the spindle.

The open edge of the shell intercepts both the holding hole for one end of the spindle (the slot is open at that edge) and means set in the slot for carrying the spindle. The open edge of the shell also appears to intercept a line connecting the axis of the disk pack spindle and the apparent spindle of the head positioner, which spindle is not supported at its ends on the shell.

According to the present invention there is provided a housing supporting a magnetic disk pack and a magnetic head positioner therein, said magnetic disk pack comprising plurality of magnetic disks supported by a first spindle, said magnetic head positioner comprising means supporting a plurality of arms each carrying a magnetic head, said housing comprising a shell and a cover,
wherein
said shell has an integral construction, and said shell and said cover have each an open edge, which open edges are coplanar when shell and cover are engaged to each other to provided a chamber to contain said magnetic disk pack and said magnetic head positioner to mechanically seal them off from the exterior of the chamber;
said shell mechanically supports both said magnetic disk pack and said magnetic head positioner, and said cover closes an opening of the shell through which said magnetic disk pack and said magnetic head positioner are inserted into the shell;
and wherein
said means supporting a plurality of arms is a second spindle;
the first spindle is supported at its two ends by a pair of first supporting means comprising a pair of circular holding holes in respective side walls of said shell facing each other, said circular holding holes being aligned coaxially to each other; and
said open edge of said shell intercepts neither the first supporting means nor a line connecting the axes of said first and second spindles.

An embodiment of the present invention can provide a housing for a magnetic disk pack device having a high mechanical rigidity, suitable for positioning a magnetic head precisely to a desired position over a magnetic disk, and can contribute to realization of a magnetic device having a high storage density and high operation speed.

An embodiment of the present invention can provide a magnetic disk device which can accommodate a plurality of magnetic disks.

An embodiment of the present invention can provide a structure for a housing which can support the spindle of a magnetic disk pack by its two ends with high mechanical rigidity.

An embodiment of the present invention can provide a structure of a housing which can support the spindle of a magnetic head positioner with high mechanical rigidity.

An embodiment of the present invention can provide a divided housing which supports the spindles of a magnetic disk device, and related means, offering precision and mechanical rigidity.

In an embodiment of the present invention the housing of a magnetic disk device is divided into two parts; one part a shell having, for example, a structure like a rectangular tub for supporting the magnetic disk pack and the magnetic head positioner in the shell, and the other part a shell or cover for covering the opening in the first part or shell, through which the magnetic disk pack and the magnetic head positioner are installed.

Reference is made, by way of example, to the accompanying drawings, in which:-
Fig. 1 is a partially cut away perspective view of a part of previously proposed magnetic disk equipment;
Figs. 2 are schematic diagrams illustrating previous proposals for ways in which housings of magnetic disk devices may be divided into two parts at a cutting plane, wherein:
   Fig. 2(a) illustrates a first type in which the housing is separated at a plane orthogonal to spindle axes;
   Fig. 2(b) is a second type in which the housing is separated into upper and lower parts at a plane between disk pack and head positioner spindles;
   Fig. 2(c) is a third type in which the housing is separated to left and right halves by a plane passing through the centres of disk pack and head positioner spindles; and
   Fig. 2(d) is a fourth type in which the housing is divided by a plane which passes through a head positioner spindle, and diagonally intersects a side wall of the housing.
Fig. 3 is a schematic side view of a housing in accordance with an embodiment of the present invention, illustrating the division of the housing, wherein the cutting plane does not intersect portions which support spindles of the disk device;
Fig. 4 is a front view of a magnetic disk device having a housing in accordance with an embodiment of the present invention, illustrating how cover and shell housing parts are engaged to each other to maintain the housing airtight;
Fig. 5 is a top view of the magnetic disk device of Fig. 4, seen from an upper side of the cover part of the housing;
Fig. 6 is a cross-sectional view taken along a plane X-X indicated in Fig. 5, illustrating magnetic disk and magnetic head positioner dispositions;
Fig. 7 is a cross-sectional view, taken along a plane Y-Y indicated in Fig. 4, illustrating how the spindle of the disk pack is supported in the shell part of the housing;
Fig. 8 is a cross-sectional view taken along a kinked line Z-Z indicated in Fig. 4 illustrating how the spindle of the magnetic head positioner is supported in the shell part of the housing.
Fig. 9 is a schematic diagram illustrating how the disk pack is installed into the shell part of the housing, and
Fig. 10 illustrates how the cover part of the housing is engaged to the shell part of the housing.

Like or similar reference signs are used to designate similar or corresponding parts.

First, the structure of a housing according to an embodiment of the present invention will be described referring to Fig. 3. Fig. 3 is a schematic side view of a housing 11 illustrating the division of the housing into two parts for insertion of disk pack and head positioner therein. The housing 11 can be separated into a shell 11A and a cover 11B at a plane (a cutting plane) vertically intersecting the plane of the Figure at a line e-e in the Figure. The shell and the cover are shaped like rectangular tubs. They are engaged to each other as shown in Fig. 3 after disk pack and the head positioner are installed therein.

Two side walls of the shell 11A, facing each other, are provided each with supporting means for supporting spindles 12 and 13 of the disk pack and the head positioner respectively. Namely, supporting holes 14 and 15 are provided in each of the two side walls. These holes are paired, the two holes in a pair being provided on opposite side walls. One pair of supporting holes 14 supports the spindle 12 at its two ends, and another pair of supporting holes 15 supports the spindle 13 at its two ends. The spindle 12 supports the disk(s) 100, and the spindle 13 supports the arm(s) 101 of the head positioner. Each pair of supporting holes is formed in one boring process which passes through the two opposed side walls. So, the centres of the supporting holes in a pair are aligned perfect coaxially to each other. This is an advantageous feature.

Each of the supporting means further comprises a pair of cylindrical bushings, and a pair of ball bearings housed in respective bushings. Each ball bearing is supported by a bushing and inserted into a corresponding supporting hole from outside of the shell (11A). Therefore the centres of the paired ball bearings are easily aligned coaxially to each other. This is a further advantageous feature.

As can be seen in Fig. 3, the supporting holes 14 and 15 are located away from the open edge e-e of the shell (11A) towards the bottom side (right-hand side in the Figure) of the tub shaped shell. So, there are neither cuts nor slots on the open edge e-e or at the supporting holes 14 and 15. This is another advantageous feature because it can provide a more rigid structure for the housing to support the spindles, as compared with previous proposals.

Further, the supporting holes can be finished to substantially perfect circles, so, the centres of the bearings can be tightly held in coaxial alignment with each other. This is another advantageous feature.

Since the cutting plane e-e does not cross the supporting portion of the spindles, the joining surfaces of the shell (11A) and the cover (11B) lie in simple planes. It is unnecessary to provide cuts or slots. This makes easy to insert a sealing means between the shell and the cover. So, air tightness of the housing is attained easily. This is a further advantage.

It will be readily understood that the supporting means for the spindle of the disk pack and that for the spindle of the head positioner can be formed with similar configurations. This means the working steps for fabrication of the housing are easy and simple. This is additional advantage.

It should be added that, in Fig. 3 and in the description above, the cutting plane e-e is taken to be parallel to the line connecting the centres of the spindles 12 and 13. However, it will be understood that the line e-e need not necessarily be parallel to the line connecting these two centres. Further, the separation line e-e need not necessarily be a straight line. This means the junction surface may not be formed on a flat plane. However, a straight line and a flat plane are most practical.

Thus, as can be seen in Fig. 3, the cutting plane indicated by a line e-e does not cross a housing portion which supports a bushing.

The shell can have a substantially perfect circular supporting hole at a position where a spindle is to be held. A supporting hole has a diameter suitable for engaging the periphery of a cylindrical bushing which supports a ball bearing in its centre. Supporting holes are formed on each of the side walls of the shell which are facing each other with one boring process. Accordingly, the holes can be formed to substantially perfect circles and the centres of the pair of supporting holes can be aligned substantially perfectly to each other. A ball bearing and bushing are inserted into a supporting hole from outside of the shell and fixed to the shell, while the relevant spindle is held in place by a jig. At the same time the two ends of the spindle are inserted into the inner rings of the relevant ball bearings. So, the centres of the bearings are held coaxially to each other enabling the spindle to rotate stably and smoothly. Such a structure can be applied for supporting both the magnetic disk pack and the magnetic head positioner.

The edge of the tublike shell has neither a cut-in portion nor a slot. So, the shell provides a high mechanical rigidity to ensure accurate positioning of the disk pack and the head positioner. The cover is engaged to the shell to seal off the disk pack from the environment. Since the engaging surfaces of the shell and the cover are in a plane, and it has no cut-in portion or slot, it is easy to insert packing between them. So, airtight sealing is easily attained. The number of parts required for the structure of the embodiment of the present invention is small, and the assembly is very easy.

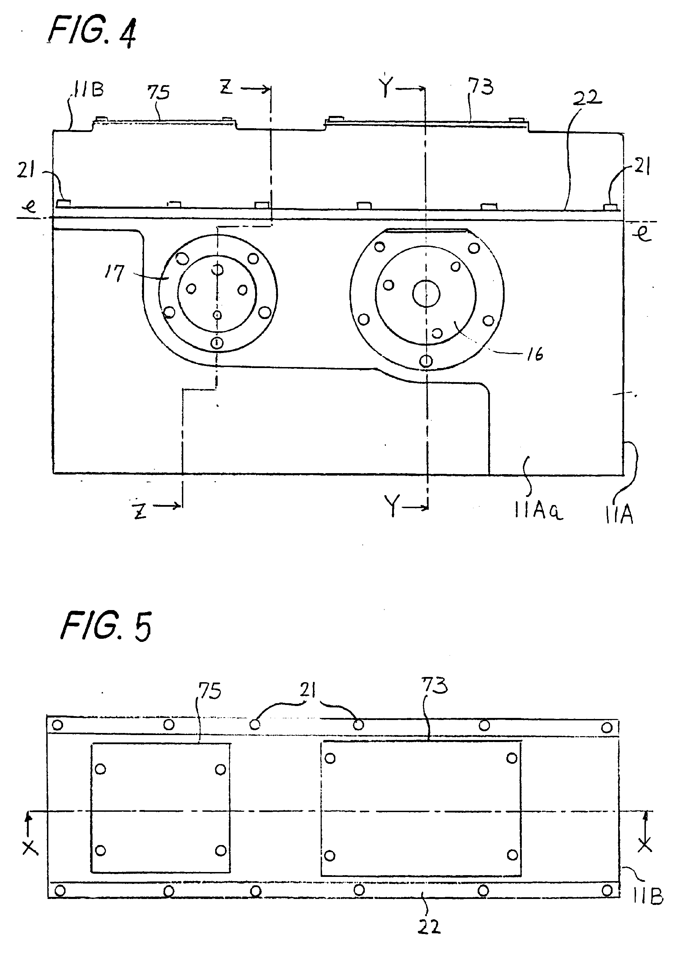

Next, details of the structure of a housing embodying the present invention will be described with reference to Figs. 4 to 8.

In reality various parts or components are provided, for example a printed circuit board, various support and drive means, etc., but the Figures show only parts relevant to the present invention, for the sake of simplicity.

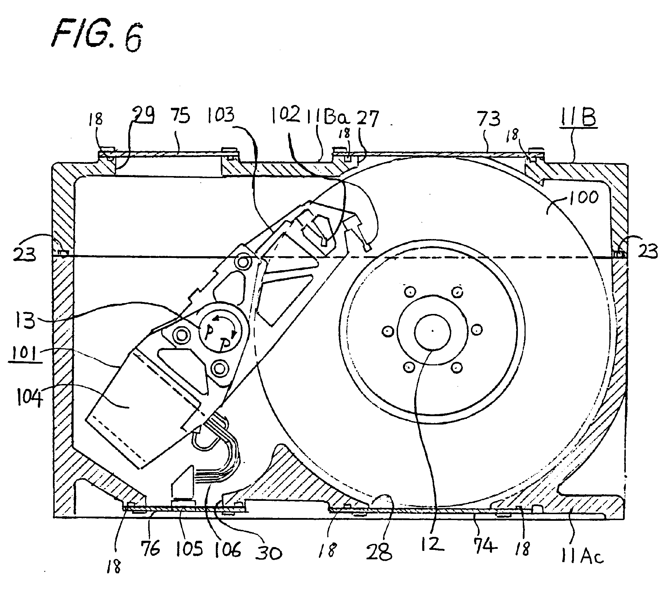

Fig. 4 is a schematic front view, Fig. 5 is a schematic top view, and Fig. 6 is a schematic cross sectional view of a magnetic disk device embodying the present invention.

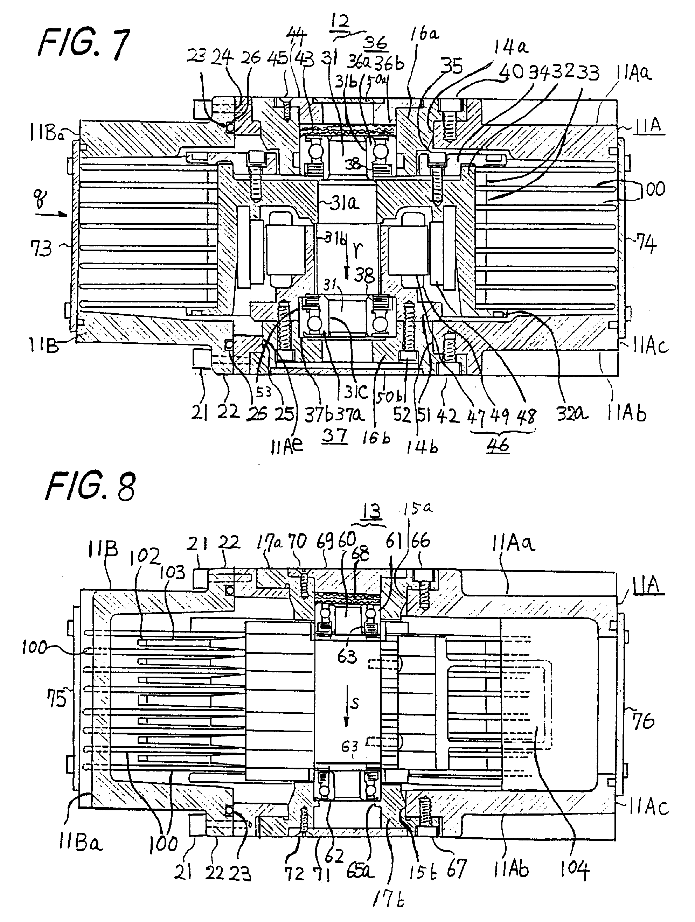

In Fig. 4, a housing cover 11B (abbreviated simply to "cover" hereinafter) and a housing shell 11A (abbreviated simply to "shell" hereinafter) are engaged to each other at a separation line e-e. A flange 22 of the cover 11B is fixed to the edge of the shell 11A by screws 21. The cover 11B is provided (at surface 11Ba) with openings used for adjusting and inspection of the devices in the housing. These openings (shown in Fig. 6 as 27 and 29) are sealed with cover plates 73 and 75, screwed to the body of the cover 11B. On the front wall (Fig. 4) of the shell 11A supporting means are seen: these are the bushings 16, 17, and screws to fix them. They will be described later in more detail referring to Figs. 7 and 8.

Fig. 6 is a schematic cross sectional view of the device taken along a plane X-X in Fig. 5. The disk(s) 100 is(are) supported at its(their) centre(s) by a spindle 12 and is(are) rotated around its axis. The head positioner 101 has a plurality of arms 103 (only one is shown) stacked around a spindle 13, and each arm is rotatable to the left or right around the axis of the spindle 13 as shown by an arrow p-p. Each arm 103 carries a magnetic head 102 at its tip. A terminal 105 receives a servo signal from a controller (not shown) and transfers the signal to a voice coil motor 104 via wires 106. Receiving the servo signal, the voice coil motor 104 drives the arm 103 to rotate by a determined angle around the spindle 13. So, the magnetic head is positioned over a desired magnetic track (not shown) on the surface of a disk 100. The mechanism to drive the arm or the spindle 13 by the voice coil motor 104 is not shown in the Figure. Such mechanisms are conventional and not directly relevant to the present invention, so, further description is omitted for the sake of simplicity.

The shell 11A and the cover 11B, having tublike shapes, are made of aluminium fabricated by die casting. The bottom surface 11Ac of the shell is provided with openings 28 and 30. They are used for adjustment or inspection of the disk and the head positioner. These openings are sealed by cover plates 74 and 76, screwed to the body of the shell 11Ac. At the periphery of each of the openings 27, 29, 28 and 30 grooves 18 are provided. Each of these grooves contains a ring seal (not shown) made from rubber for example, to maintain an airtight seal. The open edges of the cover 11B and the shell 11A (that are at the cutting plane e-e of Fig. 3) are finished in a plane parallel to the bottom surface of the tub. They are engaged to each other to close the housing. As can be seen in Fig. 6, between the engaging surfaces of the cover and the shell is inserted a ring seal 23 made of rubber for example. On the engaging surface of the cover 11B, a groove is provided to receive the sealing ring 23. Of course, the sealing mechanism used may be any other type, such as a gasket for example.

Figs. 7 and 8 are cross-sectional views of the device of Fig. 4, respectively taken along the line Y-Y and the kinked line Z-Z in Fig. 4. These Figures show respectively the supporting mechanism of the spindle 12 of the disk pack and the spindle 13 of the head positioner. In this embodiment, eight disks 100 are coaxially arranged around the spindle 12 and compose the disk pack. The number of disks may be varied as appropriate depending on the storage capacity to be provided by the device. As shown in Fig. 7, each end of the spindle 12 becomes a shaft 31. The diameter of the spindle 12 is larger than that of the shafts 31 at the middle part of it forming a two-step bulges 31a and 31b.

The disks 100 are separated spacers 33 and are spaced a predetermined distance from one another. The disks 100 and the spacers 33 are engaged to the outer surface of a cylindrical hub 32 which has a hollow structure as shown in the Figure. One end (the lower end in Fig. 7) of the hub 32 is provided with a flange 32a. The disks 100 and the spacers 33 are alternately mounted to the hub 32, and fixed by pressing them toward the flange 32a by a holding ring 34, which is placed over the stack of disks and is screwed to the hub 32 by screws 35. Such a stack of disks is mounted on the spindle 12 from its upper end and held by the step bulge 31a. The diameter of the lower part 31b of the two-step bulges is further larger than that of the upper part and the inner diameter of the cylindrical hub 32 is equal to that of the upper part. So, the hub 32 engages to the spindle 12 forming the disk pack. The step bulge 31a and the inner surface of the hub 32 are press-fitted to each other. The upper and lower shafts 31 are also press-fitted to inner rings 36a and 37a of ball bearings 36 and 37. So, the spindle 12 is held by its two ends by ball bearings 36 and 37 respectively. These ball bearings are filled with ferrofluidic seal 38 between respective inner rings 36a, 37a and outer rings 36b, 37b, so as to maintain them airtight.

In the hollow space of the hub 32 is installed a DC motor 46. The motor 46 is composed of a stator 47, a rotator 48 and a coil 49. The rotator 48 is fixed to the hub 32. So, the rotator 48 and the disks 100 are finally fixed to the spindle 12, and they are rotatable around the axis of the spindle 12. The stator 47 and the coil 49 are held by a hold element 51, and fixed to a bushing 16b by screws 52. The bushing 16b is further fixed to side wall 11Ab of the shell by screws 42. So, the stator 47 and the coil 49 are finally fixed to the wall 11Ab of the shell.

The upper and lower bearings 36 and 37 are respectively engaged to cylindrical bushings 16a and 16b. The outer surfaces of these bushings are finished precisely to fit to the inner surfaces of supporting holes 14a, 14b which are formed respectively on both side walls 11Aa and 11Ab of the shell. The inner surfaces of these bushings are also finished precisely to fit to the outer surfaces of the ball bearings 36 and 37, the centres of these ball bearings are held accurately coaxial to each other.

The outer ring 37b of the lower ball bearing 37 is supported by an inner flange of the bushing 16b. On the upper ball bearing 36 is placed a belleville spring 43, and the latter is pressed toward the shaft 31 by a collar ring 44. The collar ring 44 is fixed to the bushing 16a by a screw 45, and the bushing 16a is further fixed to the side wall 11Aa of the shell by a screw 40. Thus, the shaft 31 of the spindle 12 is biased or energized in a direction shown by an arrow r, to cut down backlash of the ball bearings. The open end of the collar ring 44 and the bushing 16b are respectively sealed with end plates 50a and 50b. They are fixed in respective positions as appropriate, for example by screwing or pasting (glueing), etc.

The structure of the head positioner 101 is generally similar to that of the above-described disk pack. Fig 8 shows a cross-sectional view of the device along a kinked line Z-Z in Fig. 4. The spindle 13 comprises a shaft 60 and ball bearings 61 and 62. The arms 103 stacked up and fixed to the spindle 13 in a manner similar to that of the disk pack. The ball bearings 61 and 62 are provided with ferrofluidic seals 63. The ball bearings 61 and 62 are respectively supported on their outsides by cylindrical bushings 17a and 17b. The outer surfaces of these bushings are finished precisely to fit to holding holes 15a and 15b. So, the axes of these ball bearings are accurately positioned to be coaxial to each other. The bushings 17a and 17b are respectively screwed to the side walls 11Aa and 11Ab by screws 66 and 67. The shaft 60 is energized (biased) toward a direction shown by arrow s by a belleville spring 68 and an end piece 69. The end piece 69 is fixed to the bushing 17a by a screw 70.
The open end of the bushing 17b is sealed with a cover plate 71 which is screwed to the bushing 17b by screws 72. The effects and structure of these elements are similar to those of the disk pack described with respect to Fig. 7. Further details of the disk pack and the head positioner are not relevant to the embodiment of the present invention, and so are omitted for the sake of simplicity.

Next, how the disk pack and the head positioner are installed in the housing will be described briefly.
First, the disks 100 and spacers 33 are fixed to the hub 32 in the manner described above. The stator 47 and the coil 49 are fixed to the hold element 51. The ball bearing 37 is fixed to the shaft 31 by press fitting. Then the spindle is inserted from its top end into the axial hole of the hold element 51. The outer ring 37b of the ball bearing 37 is accepted to inner step 53 of the hold element 51. And the hub 32 and the ball bearing 36 are successively fixed to the spindle by press fitting. Thus, the disk pack is finished.

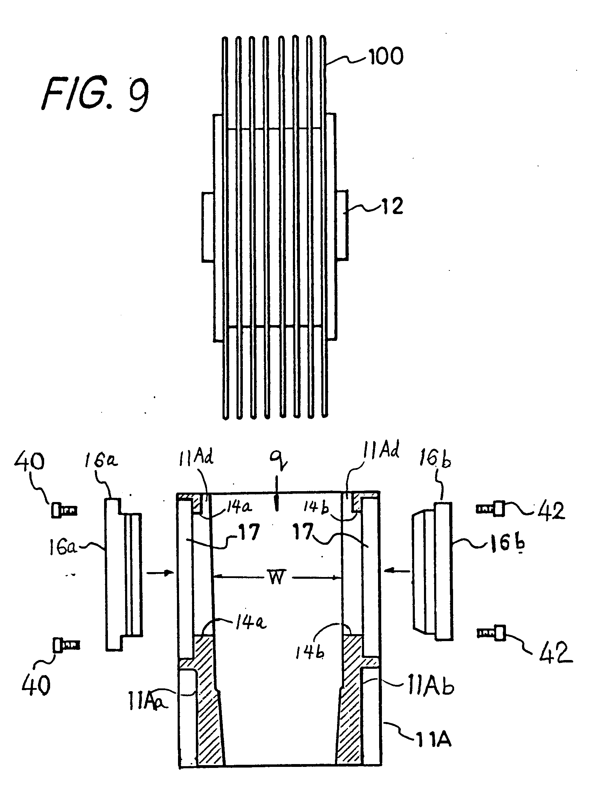

Succeedingly, the disk pack is inserted into the shell 11A from its opening from a direction as shown by an arrow q in Fig. 9 (see also Fig. 7). The disk pack is held in a position where the axis of the spindle coincides with the centres of the supporting holes 14a and 14b. Such positioning is effected by using a proper jig and tools. For such installation and positioning the openings 27 and 28 shown in Fig. 6 are used. However, since this does not directly relate to the embodiment of the present invention, further description is omitted. Then the bushings 16a and 16b are inserted into the supporting holes 14a and 14b from both sides, so the shaft of the spindle 12 is supported by the bushings 16a and 16b. Then, the bushings 16a and 16b are respectively fixed to the side walls 11Aa and 11Ab by screws 40 and 42. The belleville spring 43 and the collar ring 44 are set. The head positioner is also mounted in the shell in a similar manner.

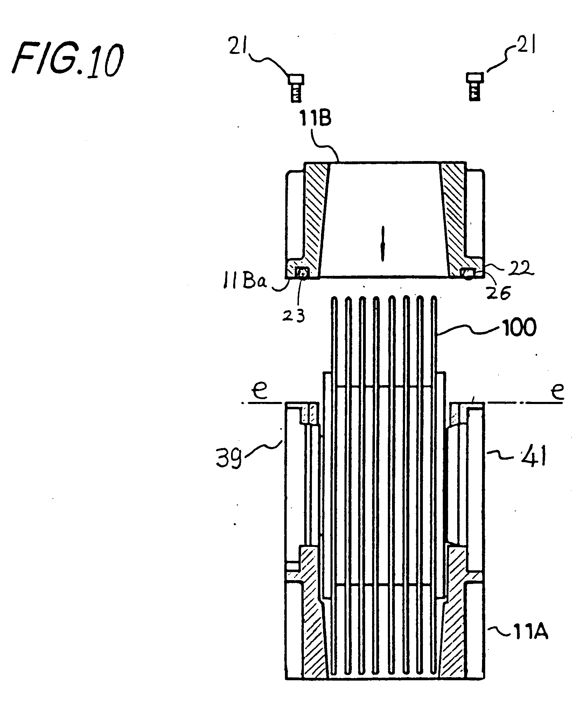

Finally, the cover 11B is set. When the disk pack and the head positioner are installed into the shell 11A its appearance is as shown in Fig. 10. Fig. 10 is a partially cut away view illustrating the disk pack part installed in the shell 11A.

The cover 11B is provided on its joining surface 11Ba with a groove 26. In the groove 26 is inserted a ring seal 23. The shell 11A and the cover 11B are joined to each other at the joining surface e-e, and the flange 22 of the cover 11B is fixed to the body of the shell by screws 21.

The following should be added. In the above disclosure, as shown in Figs. 7 or 8, the cylindrical bushings should protrude inside the shell when they are inserted into respective holding holes in order to support the spindles. However, in practice, the magnetic disk device is required to be as small as possible, from the point of view of the design requirements of equipment using the disk device. So, sometimes, as shown in Fig. 9, the inner width W of the shell is reduced to be less than the length of the spindles to be installed in the shell. In order to pass the spindle 12 through to the holding holes 14a and 14b, the inner surface of the shell 11A is partially grooved from the open edge to the holding hole 14b as shown in Fig. 9 by reference numeral 11Ad. The width of the shell is reduced to a minimum by providing such a groove. It will be apparent, however, that such a groove 11Ad neither cuts completely through the side walls 11Aa and 11Ab nor does it partially cut away the holding holes 14a or 14b; it only partially reduces the thickness of side walls 11Aa and 11Ab. Therefore, the mechanical strength of the shell and the perfect roundness of the supporting holes 14a and 14b is never lost. Of course, such a groove 11Ad is unnecessary if the shell 11A is allowed to have sufficient inner width for insertion of the spindle 12. Further, as shown in Fig. 4, the outer fringe of the bushing 16 is partially cut away. This is to reduce the height of the side wall 11A, to reduce the height of the device, and it will be apparent the holding holes are never cut away.

In the above disclosure, explanation has been given assuming that both spindles of the disk pack and the head position are supported at both their ends.
However, it will be apparent, that the scope of the invention can be extended to single-ended support structures, for example in which only one of the spindles is held by a structure as illustrated in Figs. 4 to 8.

As has been described above, a housing embodying the present invention supports the spindles of the disk pack and the head positioner at both ends, and the supporting portions of the spindles are positioned in a shell having an integral construction. So, mechanical strength of the support is increased, and the thermal off-track problem is avoided or mitigated. Holding holes to support bearings are formed precisely coaxially with each other, because they are bored in one process, and the holes can have substantially perfect circular peripheries. So, the centres of bearings to support a spindle are precisely aligned coaxially to each other, so the mutual position of the magnetic heads and the disks are stably held. Since the shell has no cut-in portion on the joining plane of the shell and cover, mechanical strength is increased. By using a housing embodying the present invention, therefore, the reliability of a disk pack device can be maintained for a long period of time. The structure of the housing is simple, the number of parts is reduced and the construction of the device is easy. So the cost of the magnetic disk device is reduced.

An embodiment of the present invention provides a divided housing for a magnetic disk device. The housing is separated into a shell which supports a magnetic disk pack and a magnetic head positioner, and a cover to close the opening of the shell. Each of the spindles of the disk pack and the head positioner (or at least one of these spindles) is held at both its ends by ball bearings. Supporting holes for supporting these bearings are formed on side walls of the shell facing each other with one boring process. So, the centres of the bearings are aligned precisely coaxially to each other. The separation plane which separates the housing into the shell and the cover may intersect the side walls substantially parallel to the line connecting the centres of the two spindles, but away from the supporting means. So, the supporting holes may be formed as substantially perfect circles, and the open edge of the shell has no cut-in parts or grooves. This increases mechanical strength of the shell, and assures a stable holding of the spindles. Therefore, the reliability of the magnetic disk device can be improved.

## Claims

1. A housing supporting a magnetic disk pack and a magnetic head positioner therein, said magnetic disk pack comprising plurality of magnetic disks (100) supported by a first spindle (12), said magnetic head positioner comprising means (13) supporting a plurality of arms (101) each carrying a magnetic head, said housing comprising a shell (11A) and a cover (11B),
wherein
said shell (11A) has an integral construction, and said shell (11A) and said cover (11B) have each an open edge, which open edges are coplanar (e-e) when shell and cover are engaged to each other to provide a chamber to contain said magnetic disk pack and said magnetic head positioner to mechanically seal them off from the exterior of the chamber;
said shell (11A) mechanically supports both said magnetic disk pack and said magnetic head positioner, and said cover (11B) closes an opening of the shell (11A) through which said magnetic disk pack and said magnetic head positioner are inserted into the shell (11A);
and wherein
said means (13) supporting a plurality of arms (101) is a second spindle (13);
the first (12) spindle is supported at its two ends by a pair of first supporting means (14a, 14b) comprising a pair of circular holding holes (14a, 14b) in respective side walls (11Aa, 11Bb) of said shell (11A) facing each other, said circular holding holes being aligned coaxially to each other; and
said open edge (e-e) of said shell (11A) intercepts neither the first supporting means (14a, 14b) nor a line connecting the axes of said first (12) and second (13) spindles.

2. A housing according to claim 1, wherein the second spindle (13) is supported at its two ends by a pair of second supporting means (15a, 15b) comprising a pair of circular holding holes (15a, 15b) in respective said side walls (11Aa, 11Bb) of said shell (11A), which circular holding holes are aligned coaxially to each other.

3. A housing according to said claim 1 or 2, wherein the pair of first supporting means, or each of the pairs of first and second supporting means, further comprises:
a pair of cylindrical bushings (16a, 16b; 17a, 17b) respectively inserted into the holding holes of the supporting means concerned from outside of said shell, the outer surfaces of said cylindrical bushings being finished to fit to the inner surfaces of corresponding holding holes.

4. A housing according to claim 3, wherein the pair of first supporting means, or each of the pairs of first and second supporting means, further comprises a pair of ball bearings (36, 37; 61, 62) supporting respective ends of the spindle concerned (12; 13), said ball bearings being supported by respective bushings (16a, 16b; 17a, 17b).

5. A housing according to claim 4, wherein said cylindrical bushings (16a, 16b; 17a, 17b) are such as to protrude inwardly into the shell (11A) for supporting said bearings (36, 37; 61, 62), when said bushings are inserted into respective holding holes (14a, 14b; 15a, 15b) from outside of the shell.

6. A housing according to claim 3, 4 or 5, wherein the two shell side walls (11Aa, 11Ab) in which the respective holding holes (14a, 14b; 15a, 15b) of a pair are provided have respective inner surfaces which are grooved (11Ad) from the open edge (e-e) of the shell (11A) to the holding holes in the side walls, for thinning the side walls at portions corresponding to the grooves.

7. A housing according to any preceding claim, wherein the open edge (e-e) of the shell (11A) is formed on a plane which is parallel to a plane including the axes of the two spindles (12, 13) and which is spaced apart from said supporting means (14a, 14b; 15a, 15b).

8. A housing according to any preceding claim, wherein a pair of holding holes (14a, 14b; 15a, 15b) are formed by boring through both the side walls (11Aa, 11Ab) of the shell (11A) facing each other in one boring process.

## Patentansprüche

1. Ein Gehäuse, das einen Magnetplattenstapel und einen Magnetkopfpositionierer in sich stützt, welcher Magnetplattenstapel eine Vielzahl von Magnetplatten (100) umfaßt, die durch eine erste Spindel (12) gestützt sind, welcher Magnetkopfpositionierer ein Mittel (13) umfaßt, das eine Vielzahl von Armen (101) stützt, von denen jeder einen Magnetkopf trägt, welches Gehäuse eine Schale (11A) und eine Abdeckung (11B) umfaßt,
bei dem
die genannte Schale (11A) eine integrale Konstruktion hat und die genannte Schale (11A) und die genannte Abdeckung (11B) jeweils eine offene Kante haben, welche offenen Kanten koplanar sind (e-e), wenn Schale und Abdeckung miteinander im Eingriff stehen, um eine Kammer vorzusehen, um den genannten Magnetplattenstapel und den genannten Magnetkopfpositionierer aufzunehmen, um sie vor dem Äußeren der Kammer mechanisch zu verschließen;
welche Schale (11A) sowohl den genannten Magnetplattenstapel als auch den genannten Magnetkopfpositionierer mechanisch stützt, und welche Abdeckung (11B) eine Öffnung der Schale (11A) verschließt, durch die der genannte Magnetplattenstapel und der genannte Magnetkopfpositionierer in die Schale (11A) eingesetzt sind;
und bei dem
das genannte Mittel (13), das eine Vielzahl von Armen (101) stützt, eine zweite Spindel (13) ist;
die erste Spindel (12) an ihren zwei Enden durch ein Paar von ersten Stützmitteln (14a, 14b) gestützt ist, das ein Paar von runden Haltelöchern (14a, 14b) in jeweiligen Seitenwänden (11Aa, 11Bb) der genannten Schale (11A) umfaßt, die einander zugewandt sind, welche runden Haltelöcher koaxial miteinander ausgerichtet sind; und
die genannte offene Kante (e-e) der genannten Schale (11A) weder die ersten Stützmittel (14a, 14b) noch eine Linie schneidet, die die Achsen der genannten ersten (12) und zweiten (13) Spindeln verbindet.

2. Ein Gehäuse nach Anspruch 1, bei dem die zweite Spindel (13) an ihren zwei Enden durch ein Paar von zweiten Stützmitteln (15a, 15b) gestützt ist, das ein Paar von runden Haltelöchern (15a, 15b) in den genannten jeweiligen Seitenwänden (11Aa, 11Bb) der genannten Schale (11A) umfaßt, welche runden Haltelöcher koaxial miteinander ausgerichtet sind.

3. Ein Gehäuse nach Anspruch 1 oder 2, bei dem das Paar von ersten Stützmitteln oder jedes der Paare von ersten und zweiten Stützmitteln ferner umfaßt:
ein Paar von zylindrischen Buchsen (16a, 16b; 17a, 17b), die jeweilig von außerhalb der genannten Schale in die Haltelöcher der betreffenden Stützmittel eingesetzt sind, von welchen zylindrischen Buchsen die äußeren Oberflächen ausgeführt sind, um an die inneren Oberflächen der entsprechenden Haltelöcher angepaßt zu sein.

4. Ein Gehäuse nach Anspruch 3, bei dem das Paar von ersten Stützmitteln oder jedes der Paare von ersten und zweiten Stützmitteln ferner ein Paar von Kugellagern (36, 37; 61, 62) umfaßt, die jeweilige Enden der betreffenden Spindel (12; 13) stützen, welche Kugellager durch jeweilige Buchsen (16a, 16b; 17a, 17b) gestützt sind.

5. Ein Gehäuse nach Anspruch 4, bei dem die genannten zylindrischen Buchsen (16a, 16b; 17a, 17b) so sind, um zum Stützen der genannten Lager (36, 37; 61, 62) in das Innere der Schale (11A) zu ragen, wenn die genannten Buchsen von außerhalb der Schale in jeweilige Haltelöcher (14a, 14b; 15a, 15b) eingesetzt sind.

6. Ein Gehäuse nach Anspruch 3, 4 oder 5, bei dem die zwei Schalenseitenwände (11Aa, 11Ab), in denen die jeweiligen Haltelöcher (14a, 14b; 15a, 15b) von einem Paar vorgesehen sind, jeweilige innere Oberflächen haben, die von der offenen Kante (e-e) der Schale (11A) zu den Haltelöchern in den Seitenwänden hin genutet (11Ad) sind, zum Verdünnen der Seitenwände an Abschnitten, die den Nuten entsprechen.

7. Ein Gehäuse nach irgendeinem vorhergehenden Anspruch, bei dem die offene Kante (e-e) der Schale (11A) auf einer Ebene gebildet ist, die parallel zu einer Ebene ist, die die Achsen der zwei Spindeln (12, 13) enthält, und die von den genannten Stützmitteln (14a, 14b; 15a, 15b) räumlich getrennt angeordnet ist.

8. Ein Gehäuse nach irgendeinem vorhergehenden Anspruch, bei dem ein Paar von Haltelöchern (14a, 14b; 15a, 15b) durch Bohren in einem Bohrvorgang durch beide Seitenwände (11Aa, 11Ab) der Schale (11A) gebildet ist, die einander zugewandt sind.

## Revendications

1. Boîtier supportant à l'intérieur un ensemble de disques magnétiques et un dispositif de positionnement de tête magnétique, ledit ensemble de disques magnétiques comportant plusieurs disques magnétiques (100) supportés par un premier axe (12), ledit dispositif de positionnement de tête magnétique comportant des moyens (13) supportant plusieurs bras (101) portant chacun une tête magnétique, ledit boîtier comportant une enveloppe (11A) et un couvercle (11B),
dans lequel
ladite enveloppe (11A) présente une construction d'un seul tenant, et ladite enveloppe (11A) et ledit couvercle (11B) ont chacun un bord ouvert, lesquels bords ouverts sont coplanaires (e-e) lorsque l'enveloppe et le couvercle sont engagés l'un avec l'autre afin de procurer une chambre destinée à contenir ledit ensemble de disques magnétiques et ledit dispositif de positionnement de tête magnétique de façon à les rendre mécaniquement étanches par rapport à l'extérieur de la chambre;
ladite enveloppe (11A) supporte mécaniquement à la fois ledit ensemble de disques magnétiques et ledit dispositif de positionnement de tête magnétique, et ledit couvercle (11B) ferme une ouverture de l'enveloppe (11A) à travers laquelle sont insérés dans l'enveloppe (11A) ledit ensemble de disques magnétiques et ledit dispositif de positionnement de tête magnétique;
et dans lequel
lesdits moyens (13) supportant plusieurs bras (101) sont constitués par un deuxième axe (13);
le premier axe (12) est supporté à ses deux extrémités par une paire de premiers moyens de support (14a, 14b) comportant une paire de trous de maintien circulaires (14a, 14b) dans des parois latérales respectives (11Aa, 11Bb) de ladite enveloppe (11A) qui se font face, lesdits trous de maintien circulaires étant alignés coaxialement l'un à l'autre; et
ledit bord ouvert (e-e) de ladite enveloppe (11A) ne coupe pas les premiers moyens de support (14a, 14b) ni la ligne reliant les axes desdits premier (12) et deuxième (13) axes.

2. Boîtier selon la revendication 1, dans lequel le deuxième axe (13) est supporté aux deux extrémités par une paire de deuxièmes moyens de support (15a, 15b) comportant une paire de trous de maintien circulaires dans des parois latérales respectives (11Aa, 11Ab) de ladite enveloppe (11A), les trous de maintien circulaires étant alignés coaxialement l'un à l'autre.

3. Boîtier selon la revendication 1 ou 2, dans lequel la paire de premiers moyens de support, ou chacune des paires de premiers et deuxièmes moyens de support, comporte en outre :
une paire de manchons cylindriques (16a, 16b; 17a, 17b) respectivement insérés dans les trous de maintien des moyens de support concernés par l'extérieur de ladite enveloppe, les surfaces extérieures desdits manchons cylindriques étant finies pour s'ajuster avec les surfaces internes des trous de maintien correspondants.

4. Boîtier selon la revendication 3, dans lequel la paire de premiers moyens de support, ou chacune des paires de premiers et deuxièmes moyens de support, comporte en outre une paire de roulements à billes (36, 37; 61, 62) supportant des extrémités respectives de l'axe concerné (12; 13), lesdits roulements à billes étant supportés par des manchons respectifs (16a, 16b; 17a, 17b).

5. Boîtier selon la revendication 4, dans lequel lesdits manchons cylindriques (16a, 16b; 17a, 17b) sont tels qu'ils dépassent vers l'intérieur dans l'enveloppe (11A) afin de supporter lesdits roulements (36, 37; 61, 62), lorsque lesdits manchons sont insérés dans des trous de maintien respectifs (14a, 14b; 15a, 15b) par l'extérieur de l'enveloppe.

6. Boîtier selon la revendication 3, 4, ou 5, dans lequel les deux parois latérales d'enveloppe (11Aa, 11Ab) dans lesquelles les trous de maintien respectifs (14a, 14b; 15a, 15b) d'une paire sont prévus présentent des surfaces internes respectives qui sont rainurées (11Ad) depuis le bord ouvert (e-e) de l'enveloppe (11A) jusqu'aux trous de maintien dans les parois latérales, afin d'amincir les parois latérales au niveau de parties correspondant aux rainures.

7. Boîtier selon l'une quelconque des revendications précédentes, dans lequel le bord ouvert (e-e) de l'enveloppe (11A) est formé sur un plan qui est parallèle au plan comprenant les axes des deux axes (12, 13) et qui est espacé desdits moyens de support (14a, 14b; 15a, 15b).

8. Boîtier selon l'une quelconque des revendications précédentes, dans lequel une paire de trous de maintien (14a, 14b; 15a, 15b) est formée en perçant les deux parois latérales (11Aa, 11Ab) de l'enveloppe (11A) se faisant face en une seule opération de perçage.
